# EUROPEAN PATENT APPLICATION

(11) **EP 3 763 462 A1**
(43) Date of publication of application: **13.01.2021**
(21) Application number: 19184859.7
(22) Date of filing: 08.07.2019
(51) Int. Cl.: B22F 3/00, B22F 3/10, B29C 64/165, B29C 64/182, B33Y 10/00, B33Y 30/00

(54) **A BINDER JET PRINTER AND METHOD THEREFOR**

(71) Applicant: Sandvik Machining Solutions AB, 811 81 Sandviken (SE)
(72) Inventor: BOSTRÖM, Magnus, 811 35 Sandviken (SE); VIKLUND, Per, 821 98 Rengsjö (SE)
(74) Representative: Sandvik

(57) **Abstract**

A binder jet printer (100) for additive manufacturing, comprising: a build chamber (101); a powder supply source (106) configured to provide powder to a build chamber; a leveling assembly (104) for leveling a powder bed in a build chamber, thereby forming a powder bed in a build chamber in which a green body is formed; a print head (107) configured for depositing binder on a leveled powder bed in a build chamber; a radiant (105) configured to irradiate a powder bed in a build chamber; a control unit (108) configured to: control the powder supply source to provide powder to a build chamber; control the leveling assembly to level the powder bed in the build chamber; control the print head to deposit binder on the leveled powder bed in the build chamber; wait a predetermined time for the deposited binder to soak the powder bed in the build chamber; control the radiant to irradiate the soaked powder bed in the build chamber. The binder jet printer further comprises at least one further build chamber (102,103), and in that the control unit further is configured to: control the powder supply source to provide powder to the at least one further build chamber; control the leveling assembly to level the powder bed in the at least one further build chamber; control the print head to deposit binder on the leveled powder bed in the at least one further build chamber; wait a predetermined time for the deposited binder to soak the powder bed in the at least one further build chamber; control the radiant to irradiate the soaked powder bed in the further build chamber;control at least two of the powder source, leveling assembly, print head, and the radiant to simultaneously serve the build chamber and the at least one further build chamber.

## Description

### TECHNICAL FIELD

The subject matter disclosed herein relates to additive manufacturing, and more particularly, to a binder jet printer and a method therefor.

### BACKGROUND

Additive manufacturing, also known as 3D printing, generally involves printing and articulate one layer at a time using specialized systems. In particular, a layer of material may be deposited on the working surface of a build chamber and bonded with another layer of the same or a different material. Additive manufacturing may be used to manufacture articles from computer-aided design models using techniques such as, but not limited to, selective laser melting (SLM), direct metal laser sintering (DMLS) or binder jet 3D printing. These additive manufacturing techniques melt, sinter, or physically bind powder particles to form layers of material to generate the desired article. Additive manufacturing may facilitate manufacturing of complex articles and enable flexibility for customization of articles compared to techniques such as molding or subtractive machining. Additionally, additive manufacturing can reduce the overall manufacturing costs associated with generating these complex articles compared to molding or subtractive machining techniques generally used within the art. One limiting factor of the speed of the printing process is that layers of material must be dispensed and leveled on the working surface after each step of melting, sintering or binding. This leveling of the material deposited on the working surface is cumbersome and usually takes a considerable amount of time.

In binder jet printing the leveling of the material is usually handled by a roller that is moved over the working surface with the roller rotating in an opposite direction. In order to increase process output there is a tendency today to provide larger and larger build chambers and to increase the traverse speed. This is associated with a number of problems. First and foremost a larger build chamber takes longer time to level, and because the diameter of the roller is rather small, due to desired properties of the rolling process, a longer roller is less rigid and may introduce uneven leveling due to bending of the roller.

Another problem associated with larger build chambers is that the powder bed within the build chamber becomes quite heavy and may require additional equipment for handling. A further problem associated with a large build chamber is if objects of different sizes are printed therein. This implies that green bodies of various sizes are present in the same build chamber. Another problem associated with binder jet printing is that the printhead may clog due to the intermittent nature of the printing process. This is in the art solved by means of extensive cleaning steps in order to keep the printhead clean and ready for printing.

An object of the present invention is to provide an improved binder jet printer that at least partly obviates the above described problems.

### SUMMARY OF THE INVENTION

According to the present invention, said object is achieved by means of a binder jet printer according to claim 1.

The binder jet printer for additive manufacturing of the invention comprises a build chamber, a powder supply source configured to provide powder to a build chamber, thereby forming a powder bed in a build chamber in which a green body is formed. The binder jet printer also includes a leveling assembly for leveling a powder bed in a build chamber, a print head configured for depositing binder on a leveled powder bed in a build chamber, a radiant configured to irradiate a powder bed in a build chamber. Furthermore the binder jet printer includes a control unit configured to control the powder supply source to provide powder to a build chamber, control the leveling assembly to level the powder bed in the build chamber, control the print head to deposit binder on the leveled powder bed in the build chamber, wait a predetermined time for the printed binder to soak the powder bed in the build chamber, and control the radiant to irradiate the soaked powder bed in the build chamber. According to the invention, the binder jet printer further comprises at least one further build chamber, and the control unit further is configured to control the powder supply source to provide powder to the at least one further build chamber, control the leveling assembly to level the powder bed in the at least one further build chamber, control the print head to deposit binder on the leveled powder bed in the at least one further build chamber, wait a predetermined time for the deposited binder to soak the powder bed in the at least one further build chamber, control the radiant to irradiate the soaked powder bed in the further build chamber. The control unit is further configured to control at least two of the powder source, leveling assembly, print head, and the radiant to simultaneously serve the build chamber and the at least one further build chamber.

According to an embodiment, the leveling assembly comprises a first roller.

According to an embodiment, the leveling assembly further comprises a second roller.

According to an embodiment, the first roller is associated with the build chamber, and the second roller is associated with the at least one further build chamber, and the control unit further is configured to level the powder bed of the build chamber with the first roller, and to level the powder bed of the at least one further build chamber with the second roller. This means that each build chamber has the powder bed leveled by the same roller, which will assure that each layer of the formed green body is rolled with the same roller.

According to yet an embodiment, the first roller and the second roller are configured to move freely in a working direction independent of each other. This allows independent leveling of two different build chambers.

According to yet another embodiment, the first roller and the second roller shares a common linear guide. This allows a mechanical solution with a minimum of linear guides which is preferred in terms of the mechanical construction.

According to yet another embodiment, the build chamber and the at least one further build chamber are arranged along a working direction of the binder jet printer in a nonoverlapping relation with each other. This allows operations to be performed simultaneously on the build chamber and the further build chamber. Thus one operation performed on the build chamber does not interfere with an operation performed on the further build chamber.

According to yet another embodiment, the build chamber and the at least one further build chamber are in line with each other. This means that the mechanical dimensions of the binder jet printer are optimized.

The invention also relates to a method of a binder jet printer having the features defined in claim 7.

The binder jet printer of the method comprises: a build chamber, a powder supply source configured to provide powder to the build chamber, thereby forming a powder bed in the build chamber, a leveling assembly for leveling a powder bed in a build chamber, a print head configured for depositing binder on a leveled powder bed in a build chamber, a radiant configured to irradiate a powder bed in a build chamber.

The method of the invention includes the steps of:
a) controlling the powder supply source to provide powder to a build chamber
b) controlling the leveling assembly to level the powder bed in a build chamber, thereby forming a powder bed in the build chamber
c) controlling the print head to deposit binder on a leveled powder bed in a build chamber
d) waiting a predetermined time for a deposited binder to soak in a powder bed in a build chamber
e) controlling the radiant to irradiate a soaked powder bed in a build chamber.

According to the invention, the binder jet printer further comprises at least one further build chamber, and in that the method of the invention further comprises performing at least two of the above steps a) to e) simultaneously on the build chamber and on the at least one further build chamber, or the method further comprises performing any of steps a), b), d) or e) simultaneously on the build chamber and on the at least one further build chamber. This allows parallell operation wherein at least two steps are performed simultaneously on the binder jet printer. This may provide a more continous operation of the printhead, which causes less problems associated with clogging.

According to an embodiment, the leveling assembly comprises a first roller for leveling a power bed, and the step b) of leveling further comprises leveling powder in a build chamber by means of the first roller.

According to an embodiment, the leveling assembly further comprises a second roller, wherein the first roller is associated with the build chamber, and the second roller is associated with the at least one further build chamber, and the step b) of leveling further comprises: leveling the build chamber with the first roller; and/or leveling the at least one further build chamber with the second roller.

The invention also concerns a non-transitory computer readable media having information embodied therein, the information including instructions for a machine to execute the method according to any one of claims 7 to 9.

Further advantages features of the method, and the binder jet printer, according to the present invention will appear from the description following below and the dependent claims.

### LIST OF DRAWINGS

The invention will in the following be more closely described by means of embodiment examples, with reference to appended drawings. In the drawings:
Figure 1 is a schematic view of a binder jet printer according to an embodiment of the present invention,
Figure 2 is a schematic view of the binder jet printer according to an embodiment of the present invention,
Figure 3 is a flowchart illustrating a method according to an embodiment of the present invention,
Figure 4 is a schematic top view of the binder jet printer according to an embodiment of the present invention, and
Figure 5 is a schematic view of a non-transitory computer readable media and the machine.

### DETAILED DESCRIPTION OF EMBODIMENTS

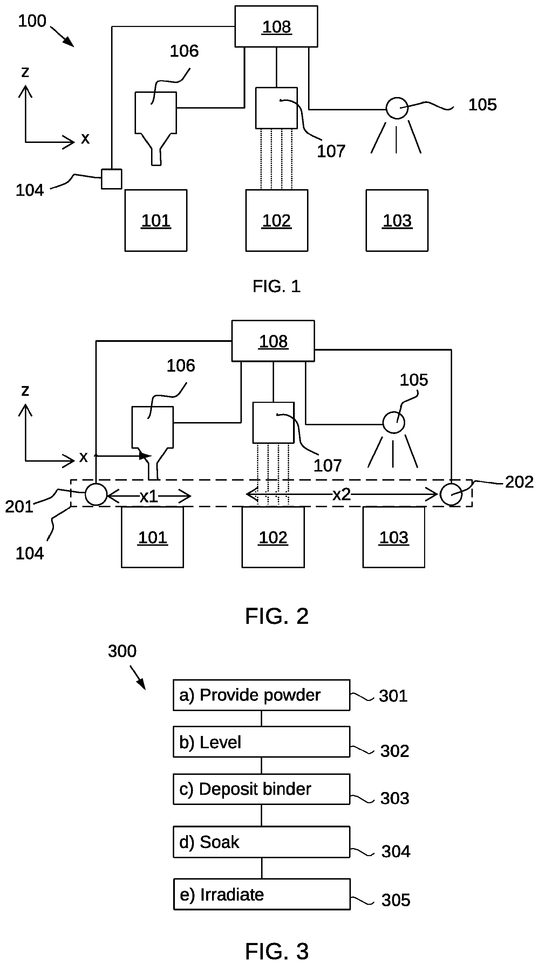

A binder jet printer 100 according to an embodiment of the present invention is very schematically illustrated in figure 1. The binder jet printer, generally designated 100, comprises a build chamber 101 of arbitrary cross section, and at least one further build chamber 102, 103 of arbitrary cross section, preferably the same as the cross section of the build chamber 101. Each build chamber is provided a bottom which is displaceable in a vertical direction, such that the printed object, e.g the green body, grows downwardly in the build chamber.

In order to provide powder to the build chamber the binder jet printer comprises a powder supply source 106. This powder supply source 106 may be of push-feed type in which the powder supply source is arranged close and in plane with the build chamber and a piston push powder upwards after which it is pushed over to the build chamber. The powder supply source may also be of hopper-type, in which a reservoir with powder is suspended above a build chamber, wherein the reservoir is provided a valve which controls the supply of powder to the build chamber.

The binder jet printer further comprises a leveling assembly 104. The leveling assembly is provided for leveling the powder supplied to the build chamber by the powder supply source. It is of great importance that the leveling is precisely performed in a repetitive manner, such that a powder layer of uniform thickness is formed each time the leveling assembly levels the powder bed.

The binder jet printer further comprises a print head 107 configured for depositing binder on a leveled powder bed in a build chamber. The print head 107 is configured to supply droplets of binder to the leveled powder bed for forming said green body in the build chamber.

The soaking refers to the time it takes for the binder to penetrate the top powder layer of the leveled powder bed down to the previous layer so that the two layers are bound together, which ranges from a fraction of a second to several minutes.

The binder jet printer also comprises a radiant 105 which is configured to irradiate a powder bed in a build chamber. This irradiation may be provided to evaporate at least some of the fluid (e.g. solvent) in the binder to avoid it bleeding through the next powder layer to be leveled from below. This could potentially cause binder and thus powder to stick to the roller. This irradiation may also enhance the solidification of the binder in the powder bed. The radiant 105 may be a heating element, a light source, or a microwave source for example. The type of radiant is selected dependent on the type of binder used. It may be important that the binder is somewhat adhesive after irradiation by the radiant in order to enhance the binding to the subsequent layer.

The binder jet printer also comprises a control unit 108 for control of at least the above parts 104, 105, 106, 107 of the printer. The control unit 108 may be a computer comprising a processor and a memory. But the control unit may also be a programmable gate array. In any case, the control unit 108 is configured to:
- control the powder supply source to provide powder to a build chamber.
- control the leveling assembly to level the powder bed in the build chamber.
- control the printer to deposit binder on the leveled powder bed in the build chamber.
- wait a predetermined time for the deposited binder to soak the powder bed in the build chamber.
- control the radiant to irradiate the soaked powder bed in the build chamber.
- control the powder supply source to provide powder to the at least one further build chamber.
- control the leveling assembly to level the powder bed in the at least one further build chamber.
- control the printer to deposit binder on the leveled powder bed in the at least one further build chamber.
- wait a predetermined time for the deposited binder to soak the powder bed in the at least one further build chamber.
- control at least two of the powder source, leveling assembly, printhead, and the radiant to simultaneously serve the build chamber and at least one further build chamber.

By having a binder jet printer with the above features it is possible to simultaneously deposit binder in one build chamber while a further build chamber is leveled, soaked, irradiated, or supplied with powder. This will allow a printhead to operate more continously without longer stops associated with waiting for soaking and leveling for example. A further advantage is that objects of different sizes may be printed in different build chambers. This makes it possible to remove and exchange the build chamber which is ready, while the build chamber with the other objects still prints. Having a build chamber with printed objects of the same sizes makes it easier to obtain optimum curing.

Now with reference made to Fig. 2 another embodiment of a binder jet printer will be disclosed. This embodiment differs from the embodiment disclosed with reference made to Fig. 1 in that the leveling assembly 104 includes a first roller 201, the first roller is associated with the build chamber 101. The leveling assembly 104 further comprises a second roller 402 associated with the at least one further build chamber 102,103. This association should be interpreted as a logical association in that a specific roller is always used to level a specific build chamber. This means that if the first roller is associated with the build chamber, then the first roller is always used to level the build chamber. The second roller 202 is associated with the at least one further build chamber. Thus, the second roller 202 is used for leveling the at least one further build chamber 102,103.

A method of a binder jet printer is schematically illustrated in Fig. 3 as a flow diagram. The method is suitable for a binder jet printer according to the embodiments described hereinabove comprising a build chamber 101 and at least one further build chamber 102,103. The method comprises the steps of:
a) (301): controlling the powder supply source to provide powder to a build chamber, thereby forming a powder bed in the build chamber
b) (302): controlling the leveling assembly to level the powder bed in a build chamber
c) (303): controlling the print head to deposit binder on a leveled powder bed in a build chamber
d) (304): waiting a predetermined time for a deposited binder to soak in a powder bed in a build chamber
e) (305): controlling the radiant to irradiate a soaked powder bed in a build chamber.

The method further comprises performing at least two of the above steps a) to e) simultaneously on the build chamber and on the at least one further build chamber, or the method further comprises performing any of steps a), b), d) or e) simultaneously on the build chamber and on the at least one further build chamber.

Thus the build chamber and the at least one further build chamber may be processed in parallel and the printhead will operate more continous compared to a binder jet printer with only one build chamber.

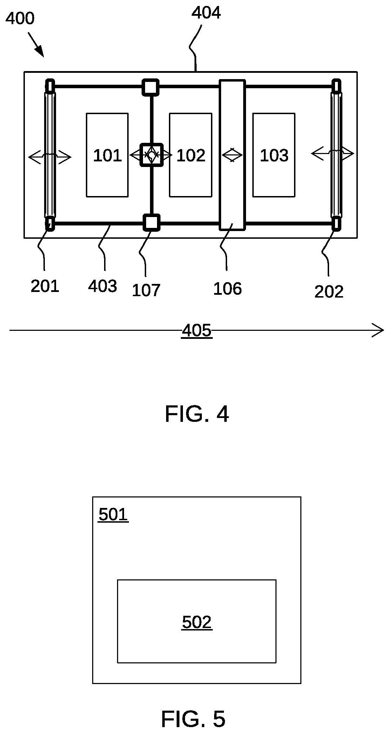

Fig. 4 shows a schematic top view of a binder jet printer (400) according to the embodiment disclosed with reference made to Fig. 2. The binder jet printer 400 comprises a build table 404 with a build chamber 101, a further build chamber 102, and yet a further build chamber 103. These build chambers are arranged in line with each other along a working direction 405. A pair of guide rails 403 are arranged in the working direction on the sides of the build chambers. The binder jet printer comprises a first roller 201 that is provided with linear bearings configured to glide on the linear guides, this first roller is associated with the build chamber 101. The binder jet printer further comprises a second roller 202 also provided with linear bearings configured to glide on the pair of linear guides 403. The second roller is associated with the further build chamber 102 and the yet further build chamber 103.

The printhead 107 is also configured to move along the guide rails, and in some embodiments it may also be configured to move in a direction perpendicular to the guide rails. The printhead 107 may also in some embodiments be configured to move in a direction normal to the build frame, generally designated the X or Y direction.

The binder jet printer 100 further comprises a powder supply source 106 in this embodiment, a hopper-type powder supply source. Not shown in this Fig. 4 the radiant 105 is arranged to selectable irradiate one of the build chambers. This irradiation may for example be heat radiation.

The control unit 108 (not shown in figure 4) is connected to the first roller 201 and to the second roller 202. Furthermore, the control unit 108 is connected to the printhead 107 and to the powder supply source 106. Since the first roller 201, the second roller 202 the printhead 107 and the powder supply source 106 share the same linear guides 403, the order of the devices arranged on the linear guides is fixed. This means for example that the printhead 107 cannot jump over the first roller 201, or the powder supply source 106.

The binder jet printer will now be described using a scenario.

In the scenario, the build chamber 101 is leveled with the first roller 201, the printhead 107 moves to the build chamber 101 and begins to deposit binder on the leveled layer, simultaneously the powder supply source 106 provides the yet further build chamber 103 with powder, this is immediately followed by leveling with the second roller 202. When the printhead is ready with printing in the build chamber 101, the print head moves away to the left in Fig. 4, in order to allow the deposited binder to soak. For example may the printhead start to deposit binder in the further build chamber 102.

In one embodiment, the powder supply source is free to jump over the printhead, this can be achieved with a second pair of linear guides provided to the powder supply source. This may provide a better utilization of the printhead 107.

Fig. 5 shows schematically a machine 501 comprising a non-transitory computer readable media 502, in which instructions are stored such that methods disclosed above with reference made to the embodiments are executed by the machine.

Many modifications and variations of the binder jet printer are possible, for example may the printhead 107 change place with the powder supply source 106. In an alternative embodiment the leveling assembly may comprise a scraper instead of the roller, or in combination with the roller.

## Claims

1. A binder jet printer (100) for additive manufacturing, comprising:
a build chamber (101);
a powder supply source (106) configured to provide powder to a build chamber;
a leveling assembly (104) for leveling a powder bed in a build chamber,
thereby forming a powder bed in a build chamber in which a green body is formed;
a print head (107) configured for depositing binder on a leveled powder bed in a build chamber;
a radiant (105) configured to irradiate a powder bed in a build chamber;
a control unit (108) configured to:
- control the powder supply source to provide powder to a build chamber;
- control the leveling assembly to level the powder bed in the build chamber;
- control the print head to deposit binder on the leveled powder bed in the build chamber;
- wait a predetermined time for the deposited binder to soak the powder bed in the build chamber;
- control the radiant to irradiate the soaked powder bed in the build chamber;
**characterized in that** the binder jet printer further comprises at least one further build chamber (102,103), and **in that** the control unit further is configured to:
- control the powder supply source to provide powder to the at least one further build chamber;
- control the leveling assembly to level the powder bed in the at least one further build chamber;
- control the print head to deposit binder on the leveled powder bed in the at least one further build chamber;
- wait a predetermined time for the deposited binder to soak the powder bed in the at least one further build chamber;
- control the radiant to irradiate the soaked powder bed in the further build chamber;
- control at least two of the powder source, leveling assembly, print head, and the radiant to simultaneously serve the build chamber and the at least one further build chamber.

2. A binder jet printer (100) for additive manufacturing according to claim 1, wherein the leveling assembly (104) comprises a first roller (201).

3. A binder jet printer (100) for additive manufacturing according to claim 2, wherein the leveling assembly (104) further comprises a second roller (202).

4. A binder jet printer for additive manufacturing according to claim 3, wherein the first roller (201) is associated with the build chamber (101), and the second roller (202) is associated with the at least one further build chamber (102,103), and the control unit further is configured to level the powder bed of the build chamber with the first roller, and to level the powder bed of the at least one further build chamber with the second roller.

5. A binder jet printer for additive manufacturing according to claim 3, wherein the first roller and the second roller are configured to move freely in a working direction (405) independent of each other.

6. A binder jet printer for additive manufacturing according to claim 4, wherein the first roller and the second roller shares a common linear guide (404).

7. A binder jet printer for additive manufacturing according to any preceding claims, wherein the build chamber and the at least one further build chamber are arranged along a working direction (405) of the binder jet printer in a nonoverlapping relation with each other.

8. A binder jet printer for additive manufacturing according to claim 6, wherein the build chamber and the at least one further build chamber are in line with each other.

9. A method (300) of a binder jet printer (100) for additive manufacturing, wherein the binder jet printer comprises:
- a build chamber (101);
- a powder supply source (106) configured to provide powder to the build chamber;
- a leveling assembly (104) for leveling a powder bed in a build chamber, thereby forming a powder bed in the build chamber;
- a print head (107) configured for depositing binder on a leveled powder bed in a build chamber;
- a radiant (105) configured to irradiate a powder bed in a build chamber; wherein the method comprises the steps of:
a) (301): controlling the powder supply source to provide powder to a build chamber;
b) (302): controlling the leveling assembly to level the powder bed in a build chamber, thereby forming a powder bed in the build chamber;
c) (303): controlling the print head to deposit binder on a leveled powder bed in a build chamber;
d) (304): waiting a predetermined time for a deposited binder to soak in a powder bed in a build chamber;
e) (305): controlling the radiant to irradiate a soaked powder bed in a build chamber;
**characterized in that** the binder jet printer further comprises at least one further build chamber, and **in that** the method further comprises performing at least two of the above steps a) to e) simultaneously on the build chamber and on the at least one further build chamber, or **in that** the method further comprises performing any of steps a), b), d) or e) simultaneously on the build chamber and on the at least one further build chamber.

10. A method of a binder jet printer according to claim 8, wherein the leveling assembly comprises a first roller (401) for leveling a power bed, and the step b) of leveling further comprises leveling powder in a build chamber by means of the first roller.

11. A method of a binder jet printer according to claim 10, wherein the leveling assembly further comprises a second roller (402), wherein the first roller is associated with the build chamber, and the second roller is associated with the at least one further build chamber, and the step b) of leveling further comprises:
- leveling the build chamber with the first roller; and/or
- leveling the at least one further build chamber with the second roller.

12. A non-transitory computer readable media (502) having information embodied therein, the information including instructions for a machine (501) to execute the method according to any one of claims 7 to 9.
